# EUROPEAN PATENT APPLICATION

(11) **EP 4 597 054 A1**
(43) Date of publication of application: **06.08.2025**
(21) Application number: 25152506.9
(22) Date of filing: 17.01.2025
(51) Int. Cl.: G01J 5/00, G01S 17/04

(54) **DETECTION SYSTEM FOR DETECTING THE PRESENCE OR ABSENCE OF A USER**

(30) Priority: 01.02.2024 IT 202400002106
(71) Applicant: STMicroelectronics International N.V., 1228 Plan-les-Ouates, Geneva (CH)
(72) Inventor: GUADALUPI, Carlo, 20018 Sedriano (MI) (IT); RIVOLTA, Stefano Paolo, 20832 Desio (MB) (IT); ARRIGONI, Piergiorgio, 28845 Domodossola (VB) (IT)
(74) Representative: Studio Torta S.p.A.

(57) **Abstract**

Detection system (20) for detecting the presence or absence of a user (11), comprising: an IR radiation sensor (22) for detecting the IR radiation emitted by the user (11); and a control unit (24; 28) for receiving from the IR radiation sensor (22) an IR radiation signal (T_{object}). The control unit (24; 28) is configured to, on the basis of the IR radiation signal (T_{object}): determine the presence/absence of the user (11) through motion analysis; verify whether a presence check or absence check condition has been detected; if so, verify whether the presence or absence of the user is confirmed (11); if the presence or absence of the user (11) is confirmed, continue to determine the presence or absence of the user (11) through baseline analysis performed as a function of the information of presence or absence of the user (11) previously confirmed.

## Description

### TECHNICAL FIELD

The present invention relates to a detection system for detecting the presence or absence of a user. Furthermore, it relates to an electronic apparatus comprising the detection system, to a detection method implemented by the detection system for detecting the presence or absence of the user, and to a corresponding computer program product.

### STATE OF THE ART

As is known, in personal computers (PCs) the detection of human presence allows the user experience to be improved, through the automatic control of PC functionalities on the basis of human presence/absence.

For example, Wake on Approach (WoA) and Lock on Leave (LoL) functionalities are currently implemented on several PCs, in particular based on Windows systems. In detail, as soon as human presence (in detail, presence of a PC user in a use position of the PC, e.g. in front of the PC screen and within a predefined distance from the PC) is detected, WoA is triggered and the PC activates again and enables the user interface, while as soon as human absence is detected, LoL is triggered and the PC disables the user interface and goes into standby state. These are well-known and commonly implemented functionalities in several PCs, specifically in Windows systems.

WoA and LoL functionalities need to be triggered in the Windows operating system on the basis of strict requirements based on human presence/absence. For example, WoA needs to be triggered with a maximum latency of 1 second with respect to the user entering the use position of the PC, while LoL needs to be triggered with a maximum latency of 5 seconds with respect to the user exiting the use position of the PC.

The known solutions to control the triggering of the WoA and LoL functionalities are generally based on the detection of pure motion (for example motion analysis through charge variation sensors) of the user, on the detection of presence and movement towards/away of the user on the basis of time-of-flight (ToF) sensors and detection of the presence of the user on the basis of infrared radiation sensors (e.g. "Thermal MOS", TMOS, sensors).

These known solutions have the following drawbacks.

Solutions based on the use of charge variation sensors have low manufacturing costs but have been shown to have reliability issues in certain cases, which make their use on a large scale difficult. In particular, these solutions are generally not capable of detecting continuous states of human presence (e.g. the user is stationary for a long period in front of the PC).

Solutions based on the use of ToF sensors are generally accurate in terms of detection but are also usually very expensive both in terms of production costs and energy consumption during use. For example, it is known that even the cheapest ToF sensor (e.g., of single-pixel type) has a much higher current consumption than other devices such as the TMOS sensor. In detail, generally the ToF sensor has a current consumption in the order of tens of mA while the TMOS sensor has a current consumption in the order of tens of µA. Furthermore, the ToF sensor is sensitive to the presence of any type of body (e.g., also inanimate objects) and this may cause false detections.

It is known that the TMOS sensor is very promising in the field of human presence/absence detection, thanks to its versatility of use, its low manufacturing cost, its reduced energy consumption, and its detection selectivity towards hot bodies (i.e., bodies emitting infrared radiation, such as human beings). However, currently known presence/absence detection techniques using the TMOS sensor are not currently capable of detecting whether or not the user is present in the field of view (FoV) of the TMOS sensor at the start-up of the algorithm, do not provide feedback on the detection confidence, are influenced by long-term drifts due to the change in environmental temperature in case of presence of the user.

Consequently, none of the currently known solutions is capable of ensuring sufficiently accurate human presence/absence check to allow reliable control of the WoA and LoL functionalities of the PCs.

Document US 2022/136903 A1 relates to systems and methods for detecting the presence of a person using infrared radiation.

Document WO 2021/209420 A1 relates to systems and methods for detecting the presence of a person using infrared radiation, in particular to wake up a device.

Document US 2018/321731 A1 relates to information handling systems, more particularly relates to a system for heuristically managing power consumed by an information handling system based on user presence detection.

### SUMMARY OF THE INVENTION

The aim of the present invention is to provide a detection system, an electronic apparatus, a detection method and a corresponding computer program product, which overcome the drawbacks of the prior art.

According to the present invention, a detection system, an electronic apparatus, a detection method and a corresponding computer program product are provided, as defined in the annexed claims which form an integral part of the present description.

### BRIEF DESCRIPTION OF THE DRAWINGS

For a better understanding of the present invention, a preferred embodiment is now described, purely by way of non-limiting example, with reference to the attached drawings, wherein:
- Figure 1 is a schematic perspective view of an electronic apparatus, according to an embodiment of the present invention;
- Figure 2 is a block diagram of the electronic apparatus of Figure 1 comprising a detection system, according to an embodiment of the present invention;
- Figure 3 is a block diagram of the detection system of Figure 2, according to an embodiment of the present invention;
- Figure 4 is a block diagram showing a detection method implemented by the detection system of Figure 2, according to an embodiment of the present invention;
- Figure 5 is a block diagram showing a finite-state machine that provides for the detection method of Figure 2, according to an embodiment of the present invention;
- Figures 6A-6F are plots showing examples of quantities measured by the detection system or generated by the detection system during the execution of the detection method, in a first exemplary case of use;
- Figures 7A-7F are plots showing examples of quantities measured by the detection system or generated by the detection system during the execution of the detection method, in a second exemplary case of use;
- Figures 8A-8F are plots showing examples of quantities measured by the detection system or generated by the detection system during the execution of the detection method, in a third exemplary case of use;
- Figures 9A-9F are plots showing examples of quantities measured by the detection system or generated by the detection system during the execution of the detection method, in a fourth exemplary case of use; and
- Figures 10A-10F are plots showing examples of quantities measured by the detection system or generated by the detection system during the execution of the detection method, in a fifth exemplary case of use.

In particular, the Figures are shown with reference to a triaxial Cartesian system defined by an X axis, a Y axis and a Z axis, orthogonal to each other.

In the following description, elements common to the different embodiments have been indicated with the same reference numbers.

### DETAILED DESCRIPTION OF THE INVENTION

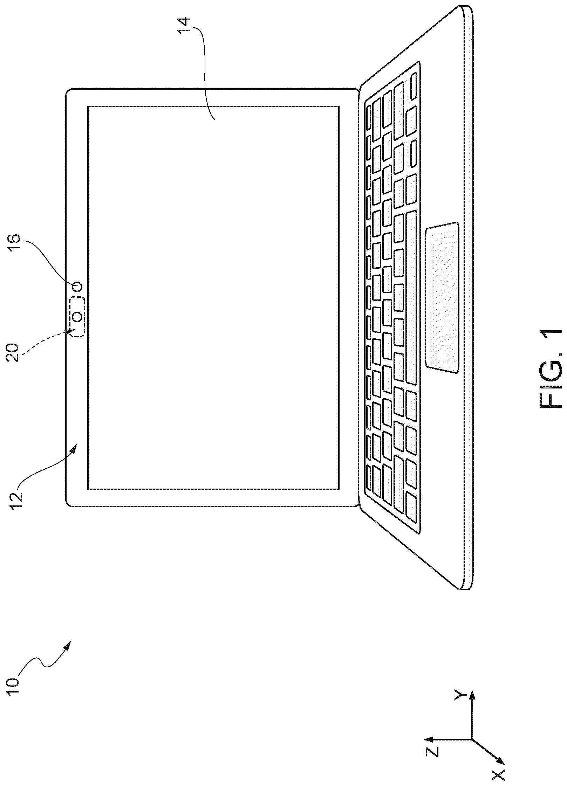

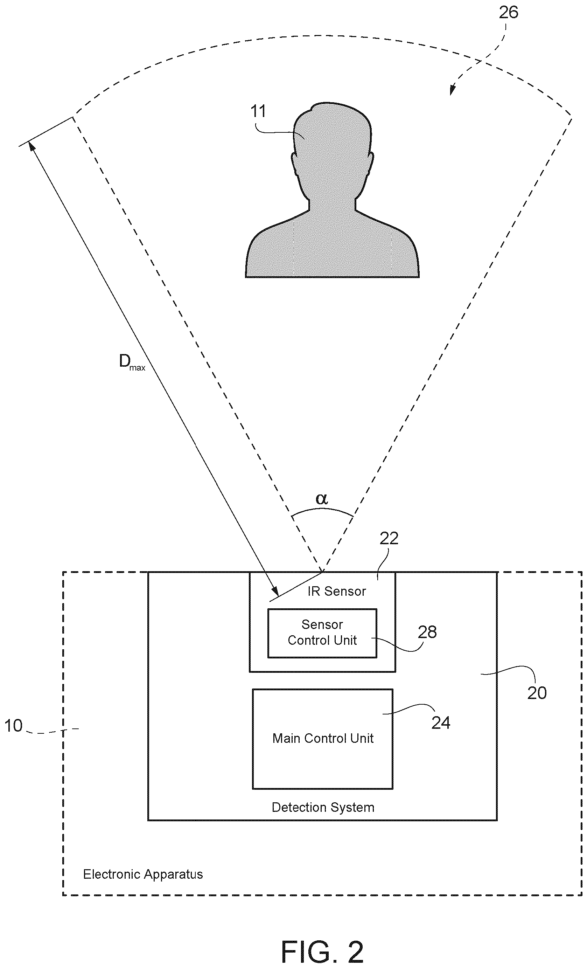

Figure 1 shows an electronic apparatus 10 usable by a user (shown in Figure 2 with the reference 11).

Figure 1 shows the exemplary and non-limiting case wherein the electronic apparatus 10 is a PC (therefore hereinafter also indicated with the reference 10).

Hereinafter, this exemplary case is considered, nevertheless other types of electronic apparatuses 10 may be similarly considered. For illustrative and non-limiting purposes, the electronic apparatus 10 may also be a soundbar, a smart household appliance, an IoT apparatus, a tablet, an industrial machinery, etc.

The PC 10 comprises a detection system 20 better described below and configured to detect the presence or absence of the user 11 at the PC 10.

In particular, the detection system 20 extends at a main surface 12 of the PC 10 which the user 11 faces when the latter is present and is in a use position (or interest position, predefined position) of the PC 10.

In detail, the use position is the position, or more generally the set of positions, in which the user 11 may use the PC 10. For example, the use position is identified by the fact that the user 11 is placed in front of the PC 10 (i.e. he/she faces the main surface 12) and is distant from the PC 10 by a distance lower than a threshold distance. In greater detail, the distance between the user 11 and the detection system 20 may be considered as the distance between the user 11 and the PC 10 and the threshold distance may be, for illustrative and non-limiting purposes, equal to about 80 cm.

For example, the PC 10 comprises a screen 14 that defines part of the main surface 12 and, as shown in Figure 1, the detection system 20 may extend over the screen 14, for example laterally to a video camera 16 of the PC 10.

In this manner, when the user 11 is in the use position of the PC 10, the user 11 faces the detection system 20 which may therefore detect the presence of the user 11.

With reference to Figure 2, the detection system 20 is now described in more detail.

The detection system 20 comprises an infrared, IR, radiation sensor 22 and a main control unit 24 coupled to each other. Hereinafter, the IR radiation sensor 22 is also referred to more simply as the IR sensor 22.

According to an exemplary embodiment, the main control unit 24 (such as a microprocessor, a microcontroller or a dedicated calculation unit) is an electronic control unit which may comprise, coupled to each other, a data storage unit (not shown, such as a memory, e.g. a non-volatile memory) for storing the acquired data and a processing unit (not shown) for processing the acquired data. In a manner not shown and per se known, the main control unit 24 may also comprise one or more of the following components: an electrical energy storage module (e.g., a battery), a power management module for electrical energy management, a digital front-end interface module with the IR sensor 22, a communication module (e.g., radio communication based on Bluetooth technology).

The IR sensor 22 is coupled (e.g., electrically coupled) to the main control unit 24. For example, the IR sensor 22 is coupled to the main control unit 24 through the digital front-end interface module of the main control unit 24, of a per se known type.

For example, the IR sensor 22 may be formed at least in part using known micromanufacturing techniques for processing semiconductor materials, such as for example silicon. Nevertheless, other technologies may be similarly considered.

The IR sensor 22 is an IR radiation sensor configured to detect the IR radiation emitted by an emitter body (i.e. a hot body and in particular the user 11) when the latter is in a field of view (FoV) 26 of the IR sensor 22.

In detail, the field of view 26 covers and comprises the use position of the PC 10. For example, the field of view 26 is defined by an opening angle α equal to about 80° and by a maximum depth Dₘₐₓ for example equal to about 1.5 m. For example, the maximum depth Dₘₐₓ may be understood as the maximum distance at which the user 11 may be with respect to the PC 10 so that the IR radiation that the user 11 emits is detected by the IR sensor 22 with an accuracy equal to a minimum accuracy, that is predefined. With the aim of having the use position of the PC 10 covered by the field of view 26, the IR sensor 22 may also comprise integrated lenses and/or covers, of a known type, which allow the properties of the field of view to be modified in such a way as to adapt it to the specific application.

In detail, the field of view 26 is sized and oriented in such a way that the user 11 is present therein when he/she is in the use position of the PC 10. Furthermore, it is sized and oriented in such a way that it is substantially impossible for multiple users to be simultaneously present in the field of view 26. For this reason, hereinafter the case in which only one user 11 may be present in the field of view 26 is considered.

In particular, the IR sensor 22 comprises a "Thermal MOS", TMOS, sensor.

The TMOS is a field-effect transistor device of a known type and typically used in sensor applications to determine the amount of radiation (in detail IR radiation) emitted by an emitter body, here the user 11. The emitter body is any hot body that emits IR radiation, such as a person or an animal. The radiation, emitted by the emitter body and received by the TMOS, causes the generation of charge carriers at the conductive channel of the TMOS and, therefore, a corresponding variation in the output current of the TMOS; the latter may be related to the amount of the radiation emitted by the object under examination, in such a way as to have a measure of the radiation emitted by the emitter body.

In general, the TMOS allows the presence or absence of the user 11 in its field of view 26 to be detected.

According to an embodiment exemplarily considered below, the TMOS sensor present in the detection system 20 is an Infrared Temperature Sensor TMOS marketed by STMicroelectronics with the reference code STHS34PF80 (further details may be found at the link https://www.st.com/en/mems-and-sensors/infrared-ir-sensors.html) .

In particular, the TMOS sensor (in detail the STMicroelectronics' STHS34PF80) is capable of generating an infrared (IR) radiation signal correlated to the presence or absence of the user 11 in the field of view 26.

The IR radiation signal is a signal indicative of the intensity of the IR radiation present in the field of view 26 of the IR sensor 22, which is correlated to the temperature of the entities (living beings such as people or inanimate but hot objects such as heating apparatuses) present in the field of view 26 of the IR sensor 22.

Consequently, the IR radiation signal is determined as a function of both the IR radiation emitted by the user 11 present in the field of view 26 of the TMOS sensor, and the IR radiation that may normally be present in the environment wherein the TMOS sensor is placed even in the absence of living beings. In other words, the IR radiation signal has an environmental baseline that depends on the amount of environmental IR radiation that the TMOS sensor measures in the absence of the user 11 in the field of view 26 (e.g., due to the temperature of the air surrounding the TMOS sensor, in the presence of heating systems, etc.), and may vary with respect to this environmental baseline when the TMOS sensor detects the IR radiation emitted by the user 11, which adds to the environmental IR radiation already present. Consequently, variations of the IR radiation signal of the TMOS sensor with respect to its environmental baseline may be correlated to the presence of the user 11 in the field of view 26 of the IR sensor 22, as better described below.

In particular, the TMOS sensor may be of a temperature-compensated type, in a per se known manner.

For example, in the present application the TMOS sensor may operate with an output data rate (ODR) equal to about 30 Hz.

In the embodiment exemplarily considered herein wherein the TMOS sensor is the STMicroelectronics' STHS34PF80, the IR radiation signal corresponds to the signal T_{object} (or also T_{obj}) indicated in the datasheet of the TMOS sensor. For this reason, hereinafter the IR radiation signal is indicated with the reference T_{object}.

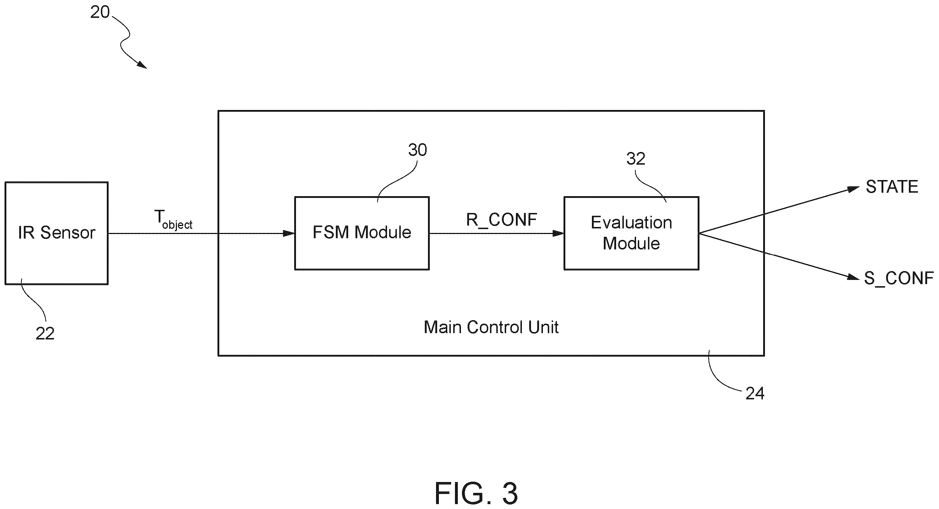

As shown in Figure 3, in use the IR sensor 22 generates the IR radiation signal T_{object} which is indicative, when the user 11 is in the field of view 26, of the intensity of the IR radiation emitted by the user 11 and detected by the IR sensor 22. Consequently, the IR radiation signal T_{object} is indicative (in an indirect manner) of the presence or absence of the user 11 in the field of view 26.

In the embodiment exemplarily shown in Figure 3, the IR radiation signal T_{object} is received by the main control unit 24.

In particular, the main control unit 24 comprises a finite state machine (FSM) module 30 and an evaluation module 32, coupled to each other. In detail, the FSM module 30 is also coupled to the IR sensor 22.

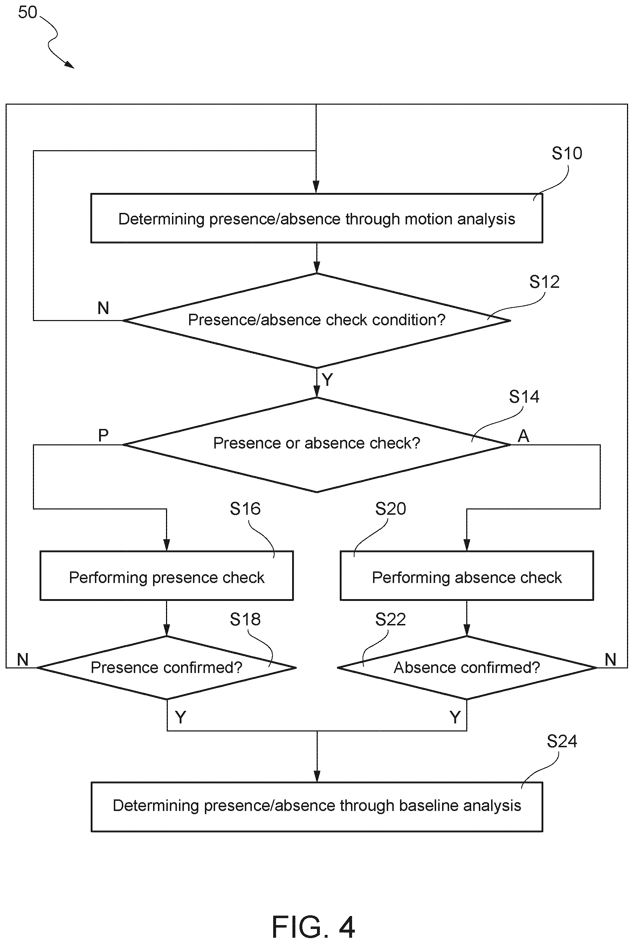

In use, the FSM module 30 receives the IR radiation signal T_{object} from the IR sensor 22, implements a detection method (shown in Figure 4 with the reference 50) and, through the detection method 50 and starting from the IR radiation signal T_{object}, generates a detection confidence signal R_CONF indicative of the detection confidence, in particular in terms of presence or absence, of the user 11 in the field of view 26.

In detail, the detection confidence signal R_CONF (e.g., digital-type electrical signal) may assume a value comprised between 0% and 1000 (boundary values included), where 0% implies absolute confidence in the absence of the user 11 in the field of view 26, 100% implies absolute confidence in the presence of the user 11 in the field of view 26 and the intermediate values imply respective intermediate levels of confidence in the presence of the user 11 in the field of view 26 (in particular, 50% implies absolute uncertainty in the actual condition of the user 11 in the field of view 26, as there is equal confidence between presence and absence).

In use, the evaluation module 32 receives the detection confidence signal R_CONF and, on the basis of the detection confidence signal R_CONF, generates a state signal STATE and a state confidence signal S_CONF.

The state signal STATE (e.g., digital-type electrical signal) is indicative of the state of the user 11 in the field of view 26 and in detail may assume a first value indicative of the presence of the user 11 in the field of view 26 or a second value indicative of the absence of the user 11 in the field of view 26.

The state confidence signal S_CONF (e.g., digital-type electrical signal) is indicative of the confidence of the detected state of presence/absence of the user 11 in the field of view 26. In detail, the state confidence signal S_CONF may assume a value comprised between 50% and 100% (boundary values included), where 50% implies absolute uncertainty in the detected presence/absence of the user 11 in the field of view 26, 100% implies absolute confidence in the presence/absence of the user 11 in the field of view 26 and the intermediate values imply respective intermediate levels of confidence in the presence/absence of the user 11 in the field of view 26.

In greater detail, if the detection confidence signal R_CONF received by the evaluation module 32 is indicative of a confidence level lower than a presence confidence threshold level (in detail, equal to 50%), the evaluation module 32 generates the state signal STATE indicative of the absence state of the user 11. If instead the detection confidence signal R_CONF received by the evaluation module 32 is indicative of a confidence level greater than, or equal to, the presence confidence threshold level, the evaluation module 32 generates the state signal STATE indicative of the presence state of the user 11.

Furthermore, if the state signal STATE is indicative of the presence state of the user 11, the evaluation module 32 generates the state confidence signal S_CONF with a value equal to the value assumed by the detection confidence signal R_CONF. Instead, if the state signal STATE is indicative of the absence state of the user 11, the evaluation module 32 generates the state confidence signal S_CONF with a value equal to the difference between 100% and the value assumed by the detection confidence signal R_CONF.

For example, if the detection confidence signal R_CONF is equal to 300, the state signal STATE is indicative of the absence state of the user 11 and the state confidence signal S_CONF is equal to 700; instead, if the detection confidence signal R_CONF is equal to 900, the state signal STATE is indicative of the presence state of the user 11 and the state confidence signal S_CONF is equal to 900.

Figure 4 shows the detection method 50 implemented by the FSM module 30 to detect the presence or absence of the user 11 in the field of view 26 (in detail, to generate the detection confidence signal R_CONF indicative of the detection confidence of the presence of the user 11).

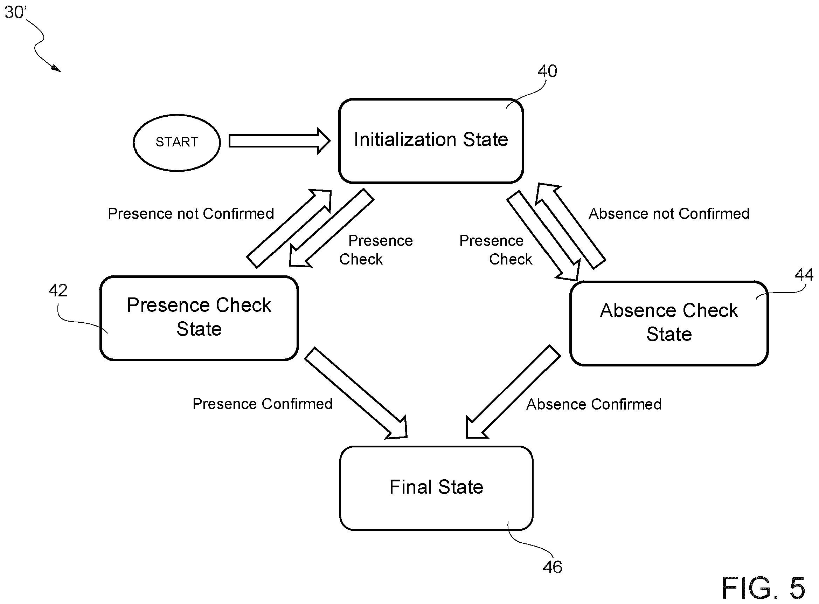

The detection method 50 is now described generally with reference to Figure 4, however further details are provided below with reference to Figure 5.

The detection method 50 is performed in real-time and therefore allows to generate the detection confidence signal R_CONF which is updated in real-time and continuously on the basis of the IR radiation signal T_{object}. As better clarified below, what changes during the steps mentioned below are the criteria on the basis of which the detection confidence signal R_CONF is updated on the basis of the IR radiation signal T_{object} .

In other words, at each instant a respective value of the detection confidence signal R_CONF (and therefore a respective value of the state signal STATE and a respective value of the state confidence signal S_CONF) is generated on the basis of the IR radiation signal T_{object} (in detail, of the value of the IR radiation signal T_{object} at the instant considered and of the values of the IR radiation signal T_{object} that are prior to the instant considered). However, through the steps of the detection method 50 the modes in which the value of the detection confidence signal R_CONF is calculated at each instant change.

In detail, at a step S10 of the detection method 50, the presence/absence of the user 11 in the field of view 26 is determined through motion analysis based on the IR radiation signal T_{object} received from the IR sensor 22. The motion analysis is better explained below with reference to Figure 5.

The presence/absence of the user 11 in the field of view 26 continues to be determined through motion analysis until a presence/absence check condition is detected, better described below and correlated to a sudden and significant variation of a baseline of the IR radiation signal T_{object} which may be indicative of an entry or exit of the user 11 in/from the field of view 26.

In detail, at a step S12 of the detection method 50 it is verified whether the presence/absence check condition is detected. As long as it is not detected (output "N" of step S12), the method returns to step S10 and the latter is repeated again. Instead, when the presence/absence check condition is detected (output "Y" of step S12), the method proceeds to a step S14 of the detection method 50.

At step S14 it is verified whether the presence/absence check condition is indicative of a presence check or of an absence check.

If the presence/absence check condition is indicative of a presence check (output "P" of step S14), the method proceeds to a step S16 of the detection method 50.

Instead, if the presence/absence check condition is indicative of an absence check (output "A" of step S14), the method proceeds to a step S20 of the detection method 50.

At step S16, a presence check is performed to verify whether the presence check is validated (i.e. whether the entry of the user into the field of view 26 is confirmed). As better described below, this occurs when the baseline variation of the IR radiation signal T_{object} respects certain criteria in terms of time duration and is therefore effectively indicative of the entry of the user 11 into the field of view 26.

At a step S18 of the detection method 50, consecutive to step S16, it is verified whether the presence check performed at step S16 has confirmed the entry, and therefore the current presence, of the user 11 into the field of view 26.

If the entry is confirmed (output "Y" of step S18), the method proceeds to a step S24 of the detection method 50.

Instead, if the entry is not confirmed (output "N" of step S18), the method returns to step S10 and the latter is repeated again.

At step S20, an absence check is performed to verify whether the absence check is validated (i.e. whether the exit of the user 11 from the field of view 16 is confirmed). As better described below, this occurs when the baseline variation of the IR radiation signal T_{object} respects certain criteria in terms of time duration and is therefore effectively indicative of the exit of the user 11 from the field of view 26.

At a step S22 of the detection method 50, consecutive to step S20, it is verified whether the absence check performed at step S20 has confirmed the exit, and therefore the current absence, of the user 11 from the field of view 26.

If the exit is confirmed (output "Y" of step S22), the method proceeds to step S24 of the detection method 50.

Instead, if the exit is not confirmed (output "N" of step S22), the method returns to step S10 and the latter is repeated again.

At step S24 of the detection method 50, the presence/absence of the user 11 in the field of view 26 is determined through baseline analysis based on the IR radiation signal T_{object} received from the IR sensor 22 and as a function of the certain information of presence or absence obtained previously (i.e. thanks to steps S16-S22). The baseline analysis is better explained below with reference to Figure 5.

Once step S24 has been reached, the detection method 50 reiterates this step until the end of the operations (e.g., until the PC 10 is switched off).

In other words, initially the determination of the presence/absence of the user 11 occurs (step S10) through motion analysis, since it is not yet known whether the user 11 is actually present or absent in the field of view 26. This analysis has the advantage of being executable without prior knowledge of the actual presence/absence of the user 11 in the field of view 26, but it has the disadvantage of generating an inaccurate detection.

The motion analysis is performed until events (i.e. the presence/absence check condition) occur which may imply an entry/exit of the user 11 into/from the field of view 26 (steps S12-S22).

If these events are not validated (e.g., they are due to events other than the entry/exit of the user 11 into/from the field of view 26), the method returns to the motion analysis.

Instead, if these events are validated, information on the actual presence/absence of the user 11 in the field of view 26 is obtained.

Consequently, after this the method proceeds (step S24) with the determination of the presence/absence of the user 11 which occurs through the baseline analysis, on the basis of this previously acquired information. In fact, the disadvantage of the baseline analysis is that it requires prior knowledge of the actual presence/absence of the user 11 in the field of view 26 and of the extent of the baseline variation of the IR radiation signal T_{object} which is actually indicative of an entry or exit of the user 11 into/from the field of view 26, however it has the advantage of allowing a more accurate and reliable detection with respect to the motion analysis.

Furthermore, and in a manner not shown in Figure 4, one or more functionalities of the electronic apparatus 10 may be controlled on the basis of the state signal STATE or the detection confidence signal R_CONF. In detail, the presence or absence information carried by the state signal STATE and the detection confidence signal R_CONF may be used to selectively trigger the Wake on Approach (WoA) functionality and the Lock on Leave (LoL) functionality. For example, the WoA functionality may be triggered with an average human presence latency up to 1 second, while the LoL functionality may be triggered with an average human absence latency up to 5 seconds.

Figure 5 shows the finite state machine (FSM, indicated here with the reference 30') implemented by the FSM module 30.

In detail, the FSM 30' comprises the following states: an initialization state 40, a presence check state 42, an absence check state 44 and a final state 46.

The initialization state 40 implements step S10 of the detection method 50.

The presence check state 42 implements step S16 of the detection method 50.

The absence check state 44 implements step S20 of the detection method 50.

The final state 46 implements step S24 of the detection method 50.

Furthermore, the transition condition between the initialization state 40 and the presence check state 42 implements steps S12 and S14 (output "P"), the transition condition between the initialization state 40 and the absence check state 44 implements steps S12 and S14 (output "A"), the transition condition between the presence check state 42 and the initialization state 40 implements step S18 (output "N"), the transition condition between the absence check state 44 and the initialization state 40 implements step S22 (output "N"), the transition condition between the presence check state 42 and the final state 46 implements step S18 (output "Y"), and the transition condition between the absence check state 44 and the final state 46 implements step S22 (output "Y").

In greater detail, in the initialization state 40 the presence/absence of the user 11 in the field of view 26 is determined through motion analysis, since it is not yet known whether the user 11 is actually already present in the field of view 26.

In this state, the detection confidence signal R_CONF is initialized to an initial confidence (in detail, equal to 100%) and may then vary between 0% and 100% as a function of a standard deviation of the IR radiation signal T_{object}.

In particular, in this state the confidence value of the detection confidence signal R_CONF decreases with a decreasing rate if the standard deviation of the IR radiation signal T_{object} is lower than a first motion threshold (indicative of absence of motions of hot bodies in the field of view 26 and for example equal to about 30 LSB), and increases with an increasing rate if the standard deviation of the IR radiation signal T_{object} is greater than a second motion threshold (greater than the first motion threshold and indicative of presence of motions of hot bodies in the field of view 26, and for example equal to about 40 LSB) . Furthermore, the confidence value of the detection confidence signal R_CONF remains unchanged if the standard deviation of the IR radiation signal T_{object} is comprised between, or equal to, the first motion threshold and the second motion threshold.

Alternatively, similar actions may be implemented on the basis of a single motion threshold (e.g., with an intermediate value between the first motion threshold and the second motion threshold and here exemplarily equal to about 35 LSB). In this case, the confidence value of the detection confidence signal R_CONF decreases with the decreasing rate if the standard deviation of the IR radiation signal T_{object} is lower than this motion threshold, and increases with the increasing rate, conversely. Hereinafter, however, reference is exemplarily made to the case previously described with the first and the second motion thresholds.

As is evident, the increase stops when the confidence value of the detection confidence signal R_CONF reaches 1000 (and in this case the confidence value remains constant as long as this increasing condition persists) and the decrease stops when the confidence value of the detection confidence signal R_CONF reaches 0% (and in this case the confidence value remains constant as long as this decreasing condition persists).

In greater detail, the decreasing rate is fixed and predefined and for example is equal to 3% per second. The increasing rate is instead variable and for example is equal to the sum of a fixed and predefined rate (e.g., 3% per second) and a variable rate as a function of the standard deviation of the IR radiation signal T_{object} (e.g., equal to the product between a fixed and predefined rate, e.g. 3% per second, and a ratio between the measured standard deviation of the IR radiation signal T_{object} and the value of the second motion threshold). In other words, Tₐ=Tₖ· (1+Vₘ/Vₛ), where Tₐ is the increasing rate, Tₖ is the fixed and predefined rate, Vₘ is the measured standard deviation of the IR radiation signal T_{object} and Vₛ is the second motion threshold. In particular, this variable rate as a function of the standard deviation of the IR radiation signal T_{object} allows greater weight to be given to possible motions of the user 11, so as to make the analysis more sensitive to the detection of presence in the event of motions or gestures. Consequently, in general the decreasing rate is, in absolute value, equal to or lower than the increasing rate.

The confidence update on the basis of the criteria listed here defines the motion analysis previously mentioned and performed in step S10.

Furthermore, in the initialization state 40 the baseline variation of the IR radiation signal T_{object} is also calculated and compared with a baseline variation threshold to verify the presence/absence check condition.

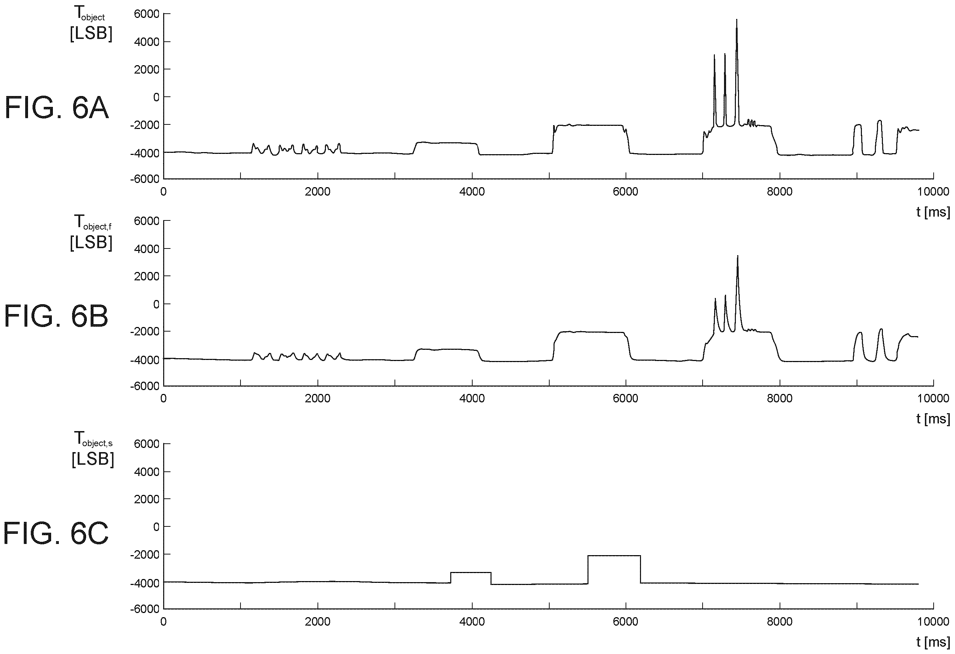

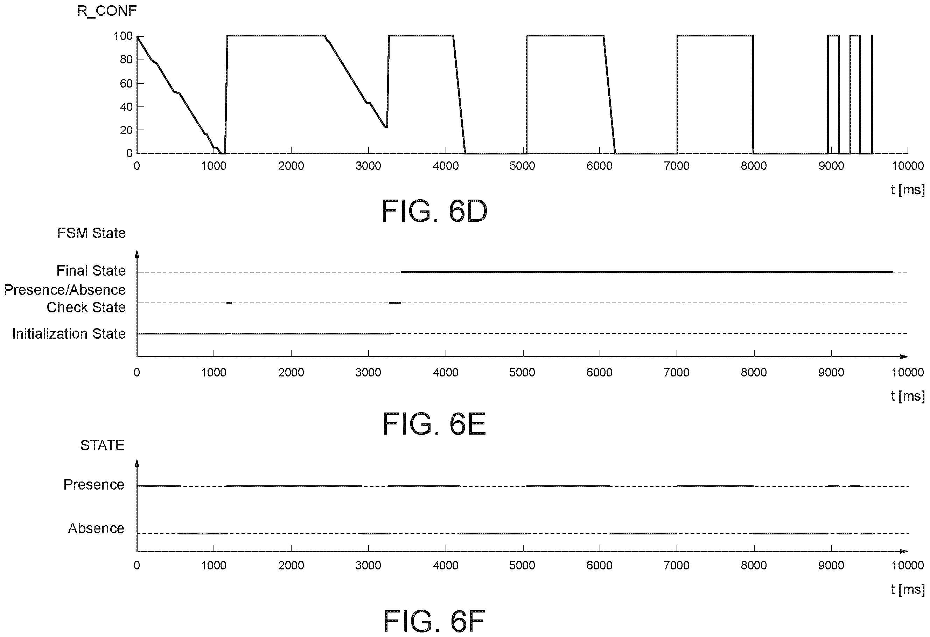

In detail, the baseline variation of the IR radiation signal T_{object} is calculated as the difference between a fast mean signal and a slow mean signal of the IR radiation signal T_{object}. The fast mean signal and the slow mean signal are shown below in Figures 6B, 6C, 7B, 7C, 8B, 8C, 9B, 9C, 10B and 10C with the references T_{object,f} and T_{object,s}, respectively.

The fast mean signal and the slow mean signal are calculated by filtering the IR radiation signal T_{object} with respective filters with different time constants (in detail, such that the fast mean signal is more sensitive to rapid changes in the IR radiation signal T_{object} with respect to the slow mean signal). In particular, the fast mean signal and the slow mean signal are calculated using exponential averaging filters which each have a respective time decay coefficient which is greater for the fast mean signal and smaller for the slow mean signal. For example, the time decay coefficient for the fast mean signal is equal to 0.05 and the time decay coefficient for the slow mean signal is equal to 0.0025.

In greater detail, the fast mean signal T_{object,f} and the slow mean signal T_{object,s} may be calculated according to the following mathematical expression: T_{object,i} (t) = T_{object,i} (t-1)+kᵢ· (T_{object}(t)-T_{object,i}(t-1)), where i=f,s is an index that identifies the fast mean signal T_{object,t} and the slow mean signal T_{object,s} respectively, and k_{f} and kₛ are the time decay coefficients for the fast mean signal T_{object,f} and the slow mean signal T_{object,s}, respectively.

Furthermore, the slow mean signal may not be updated constantly but in a selective manner on the basis of the fast mean signal, so as to decrease its dependence on rapid motions or gestures. In detail, it is possible that the update of the slow mean signal occurs only when the value of the standard deviation of the fast mean signal is lower than a mean update threshold (predefined and fixed and for example equal to 150 LSB), leaving instead, the slow mean signal unchanged when the value of the standard deviation of the fast mean signal is greater than, or equal to, the mean update threshold. In other words, the slow mean signal undergoes clamping when the standard deviation of the fast mean signal is greater than, or equal to, the mean update threshold (i.e. when peaks, positive or negative, of the IR radiation signal T_{object} associable with entry/exit motions or gestures of the user 11, are detected).

The baseline variation of the IR radiation signal T_{object} is then compared in absolute value with the baseline variation threshold (e.g., at each instant), to implement the control of step S12. The baseline variation threshold is of a predefined and fixed type (e.g., it is equal to 500 LSB). In detail, the presence/absence check condition is detected if the baseline variation of the IR radiation signal T_{object} is, in absolute value, greater than the baseline variation threshold, while it is not detected conversely. If the presence/absence check condition is detected, the method goes from the initialization state 40 to one of the presence check state 42 and the absence check state 44.

In particular, the choice between the presence check state 42 and the absence check state 44 occurs on the basis of the sign of the baseline variation of the IR radiation signal T_{object} (step S14). If the difference between the fast mean signal and the slow mean signal of the IR radiation signal T_{object} is positive, a positive shift (i.e. an increase) of the baseline of the IR radiation signal T_{object} corresponding to a possible entry of the user 11 into the filed of view 26 occurs and then the method goes to the presence check state 42 (output "P" of step S14). Instead, if the difference between the fast mean signal and the slow mean signal of the IR radiation signal T_{object} is negative, a negative shift (i.e. a decrease) of the baseline of the IR radiation signal T_{object} corresponding to a possible exit of the user 11 from the field of view 26 occurs and then the method goes to the absence check state 44 (output "A" of step S14).

In the presence check state 42, it is verified whether the baseline variation of the IR radiation signal T_{object} is actually indicative of an entry of the user 11 into the filed of view 26, or whether it is due to other events that cause a momentary but significant increase in the baseline of the IR radiation signal T_{object} (e.g., motions or gestures of the user 11 already present in the field of view 26, or other events of increase in the IR radiation detected by the IR sensor 22 and not caused by the user 11). This verification corresponds to steps S16 and S18.

In detail, in this state it is verified whether the baseline variation of the IR radiation signal T_{object} remains, in absolute value, greater than a first baseline variation percentage threshold for a time interval greater than a first threshold time interval, of a fixed and predefined type and for example equal to 1 second, and in any case not greater than 1 second. The first baseline variation percentage threshold is correlated to the baseline variation threshold and, in detail, is directly proportional to the baseline variation threshold and lower than the latter. For example, the first baseline variation percentage threshold is equal to a first percentage (e.g., 90%) of the baseline variation threshold.

If this condition is confirmed (output "Y" of step S18), the significant and lasting baseline variation of the IR radiation signal T_{object} is effectively indicative of the entry of the user 11 into the field of view 26, and therefore of his/her presence in the latter. In this case, the method then goes to the final state 46.

Instead, if this condition is not confirmed (output "N" of step S18), the significant but brief baseline variation of the IR radiation signal T_{object} is not considered to be indicative of the entry of the user 11 into the field of view 26 but is attributable to other events, and therefore does not allow the presence of the entry of the user 11 into the field of view 26 to be validated. In this case, the method then returns to the initialization state 40.

In the absence check state 44, it is verified whether the baseline variation of the IR radiation signal T_{object} is actually indicative of an exit of the user 11 from the field of view 26, or whether it is due to other events that cause a momentary but significant decrease in the baseline of the IR radiation signal T_{object} (e.g., motions or gestures of the user 11 already present in the field of view 26, or other events of decrease in the IR radiation detected by the IR sensor 22 and not caused by the user 11). This verification corresponds to steps S20 and S22.

In detail, in this state it is verified whether the baseline variation of the IR radiation signal T_{object} remains, in absolute value, greater than the first baseline variation percentage threshold for a time interval greater than a second threshold time interval, of a fixed and predefined type and for example equal to 5 seconds, and in any case not greater than 5 seconds.

If this condition is confirmed (output "Y" of step S22), the significant and lasting baseline variation of the IR radiation signal T_{object} is effectively indicative of the exit of the user 11 from the field of view 26, and therefore of his/her absence in the latter. In this case, the method then goes to the final state 46.

Instead, if this condition is not confirmed (output "N" of step S22), the significant but brief baseline variation of the IR radiation signal T_{object} is not considered to be indicative of the exit of the user 11 from the field of view 26 but is attributable to other events, and therefore does not allow the absence of the entry of the user 11 into the field of view 26 to be validated. In this case, the method then returns to the initialization state 40.

In the final state 46, the presence/absence of the user 11 is determined through baseline analysis, carried out on the basis of the prior knowledge of the presence or absence of the user 11 in the field of view 26. This corresponds to step S24.

In particular, when the method goes to the final state 46, the detection confidence signal R_CONF initially assumes a value equal to 1000 (i.e. certain presence of the user 11) if the method arrives from the presence check state 42, or equal to 0% (i.e. certain absence of the user 11) if the method arrives from the absence check state 44.

Thereafter, the transition from detection of presence to that of absence, and vice versa, is dictated in the final state 46 by the detection of events wherein the baseline variation of the IR radiation signal T_{object} is, in absolute value, greater than the baseline variation threshold.

In particular, if the detection confidence signal R_CONF at the instant preceding that considered is indicative of the absence of the user 11 and at the instant considered it is detected that the baseline variation of the IR radiation signal T_{object} is positive and becomes, in absolute value, greater than the baseline variation threshold, then the value of the detection confidence signal R_CONF is immediately set to 100%.

Furthermore, in this situation the value of the slow mean signal may also temporarily be set (i.e. clamped), thus preventing it from varying and updating as a function of the values of the IR radiation signal T_{object} which have this significant baseline variation. This block of the updating of the slow mean signal lasts as long as the IR radiation signal T_{object} has settled to a new stable baseline. In other words, the block of the updating of the slow mean signal lasts as long as the standard deviation of the IR radiation signal T_{object} is greater than a clamping threshold (predefined and fixed and, for example, equal to about 50 LSB). As soon as the standard deviation of the IR radiation signal T_{object} becomes equal to, or lower than, the clamping threshold, the slow mean signal is initialized again to the value that the fast mean signal possesses at that moment. This prevents the inevitable fluctuations of the IR radiation signal T_{object} at the transition from absence to presence from significantly affecting the slow mean signal, which would then need a long time to settle back to a value that realistically represents the new baseline of the IR radiation signal T_{object}.

Furthermore, if in this case the baseline variation of the IR radiation signal T_{object} becomes, in absolute value, lower than or equal to the first baseline variation percentage threshold before the slow mean signal is initialized again at the end of the clamping, then the value of the detection confidence signal R_CONF is immediately reset to 0% and the block of the updating of the slow mean signal is interrupted.

Instead, if the detection confidence signal R_CONF at the instant preceding that considered is indicative of the presence of the user 11 and at the instant considered it is detected that the baseline variation of the IR radiation signal T_{object} is negative and becomes, in value absolute, greater than the baseline variation threshold, then the value of the detection confidence signal R_CONF decreases with a final decreasing rate which is fixed and predefined and is for example equal to 20% per second.

Furthermore, in this situation the value of the slow mean signal may also temporarily be set (i.e. clamped), similarly to what has been previously described. In this case however, the block of the updating of the slow mean signal is performed as soon as it is detected that the baseline variation of the IR radiation signal T_{object} is negative and becomes, in absolute value, greater than the baseline variation threshold and lasts for the time required by the detection confidence signal R_CONF to reach 0% (in the example considered, equal to 5 seconds) and then for the time necessary for the IR radiation signal T_{object} to settle to a new stable baseline. Thereafter, the block of the updating is interrupted and the slow mean signal is initialized again as already described previously.

Furthermore, if in this case the baseline variation of the IR radiation signal T_{object} becomes, in absolute value, lower than or equal to the first baseline variation percentage threshold before the slow mean signal is initialized again at the end of the clamping, then the value of the detection confidence signal R_CONF is immediately reset to 100% and the block of the updating of the slow mean signal is interrupted.

If the detection confidence signal R_CONF is indicative of the presence of the user 11 and a baseline variation of the IR radiation signal T_{object} is detected which is positive and becomes, in absolute value, greater than a second baseline variation percentage threshold, the value of the slow mean signal may temporarily be set (i.e. clamped), similarly to what has been previously described. In this case, the block of the updating of the slow mean signal lasts as long as the IR radiation signal T_{object} settles to a new stable baseline. Thereafter, the block of the updating is interrupted and the slow mean signal is initialized again as better described previously. The second baseline variation percentage threshold is correlated to the baseline variation threshold and, in detail, is directly proportional to the baseline variation threshold and lower than the latter (in greater detail, it is also lower than the first baseline variation percentage threshold). For example, the second baseline variation percentage threshold is equal to a second percentage (e.g., 50%) of the baseline variation threshold.

Furthermore, if in this case the baseline variation of the IR radiation signal T_{object} returns to being, in absolute value, lower than or equal to the second baseline variation percentage threshold before the slow mean signal is initialized again at the end of the clamping, then the block of the updating of the slow mean signal is interrupted and the latter is initialized again.

Figures 6A-10F show exemplary cases of presence/absence detection performed through the FSM 30'.

In particular, Figures 6A-10F have, on the respective abscissa axes, time scales which are shown with reference to the number of samples (hereinafter also indicated with the reference "sam") that have been acquired starting from the beginning of the measurement. Considering for illustrative purposes an ODR equal to 30 Hz, each sample is equivalent to about 33 ms (therefore 1000 samples are equivalent to 33 seconds). Consequently, hereinafter reference is made to the number of samples as a time measure as these quantities are clearly correlated with each other through the ODR, as previously mentioned.

Furthermore, for each set of Figures 6A-6F, 7A-7F, 8A-8F, 9A-9F, 10A-10F, the Figures identified with the letter A show respective examples of the IR radiation signal T_{object}, the Figures identified with the letter B show respective examples of the fast mean signal T_{object,f}, the Figures identified with the letter C show respective examples of the slow mean signal T_{object,s}, the Figures identified with the letter D show respective examples of the detection confidence signal R_CONF, the Figures identified with the letter E show respective examples of the state of the FSM 30', and the Figures identified with the letter F show respective examples of the state signal STATE.

In detail, Figures 6A-6F show the case in which, as time elapses, a succession of events, different from each other, occur.

For example, approximately in the initial interval 0sam<t<1100sam, the IR radiation signal T_{object} is substantially stable (i.e. its standard deviation is lower than the first motion threshold). Consequently, the method is in the initialization state 40 and the detection confidence signal R_CONF, initialized to 100%, progressively decreases down to cause the state signal STATE to switch from the initial presence value to the absence value (at about t=500sam).

Subsequently, approximately in the interval 1100sam<t<2200sam, brief and repeated positive fluctuations of the IR radiation signal T_{object} occur (i.e. the standard deviation of the IR radiation signal T_{object} is repeatedly but briefly greater than the second motion threshold). In this case, it may be seen how the fast mean signal follows quite faithfully the trend of the IR radiation signal T_{object}, while the slow mean signal has only a progressive and slow increase, substantially negligible with respect to the variation over time of the fast mean signal. Due to these positive fluctuations, the method briefly goes from the initialization state 40 to the presence check state 42 (approximately at t=1200sam). Consequently, the detection confidence signal R_CONF is immediately set to 100% and causes the state signal STATE to switch from the absence value to the presence value (at about t=1200sam). However, since none of the fluctuations of the IR radiation signal T_{object} maintains high for a time period greater than the first threshold time interval, the method returns to the initialization state 40 wherein, in view of the fluctuations, the detection confidence signal R_CONF is maintained at 100%.

At the end of the fluctuations, the detection confidence signal R_CONF gradually decreases again down to cause the state signal STATE to switch again from the presence value to the absence value (at about t=2900sam).

Approximately in the interval 3200sam<t<4100sam, a significant and stable baseline variation of the IR radiation signal T_{object}, of a positive type, occurs. This variation is initially greater, in absolute value, than the baseline variation threshold and remains greater than the first baseline variation percentage threshold for a time period greater than the first threshold time interval, consequently at about t=3200sam the method goes to the presence check state 42 and then arrives at the final state 46, wherein it remains for the rest of the time considered. Consequently, at about t=3200sam the detection confidence signal R_CONF is immediately set to 100% and causes the state signal STATE to switch from the absence value to the presence value. In detail, in this case it may be noted how the slow mean signal undergoes clamping approximately in the interval 3200sam<t<3700sam and is then, at about t=3700sam, initialized to the value that the fast mean signal possesses at that instant.

At about t=4000sam, the variation just discussed ends and thus the detection confidence signal R_CONF rapidly decreases and causes the state signal STATE to switch. In detail, in this case it may be noted how the slow mean signal T_{object,s} undergoes clamping approximately in the interval 4000sam<t<4100sam and is then, at about t=4100sam, initialized to the value that the fast mean signal T_{object,f} possesses at that instant.

Approximately at 5000sam<t<6000sam, a significant and stable baseline variation of the IR radiation signal T_{object}, of a positive type, is repeated again. Therefore, changes in the detection confidence signal R_CONF and in the state signal STATE, similar to those previously described, occur.

Approximately at 7000sam<t<8000sam, a significant and stable baseline variation of the IR radiation signal T_{object}, of a positive type, is repeated again. Furthermore, brief and repeated peaks of the IR radiation signal T_{object} are also present in this interval. The trend of the detection confidence signal R_CONF and of the state signal STATE are similar to those previously described for similar cases and therefore, as expected, are not influenced by these peaks (e.g., due to gestures or motions of the user 11).

As shown approximately in the interval 9000sam<t<10000sam, the switching of the state signal STATE may also occur rapidly in the final state 46 (e.g., approximately every 100sam).

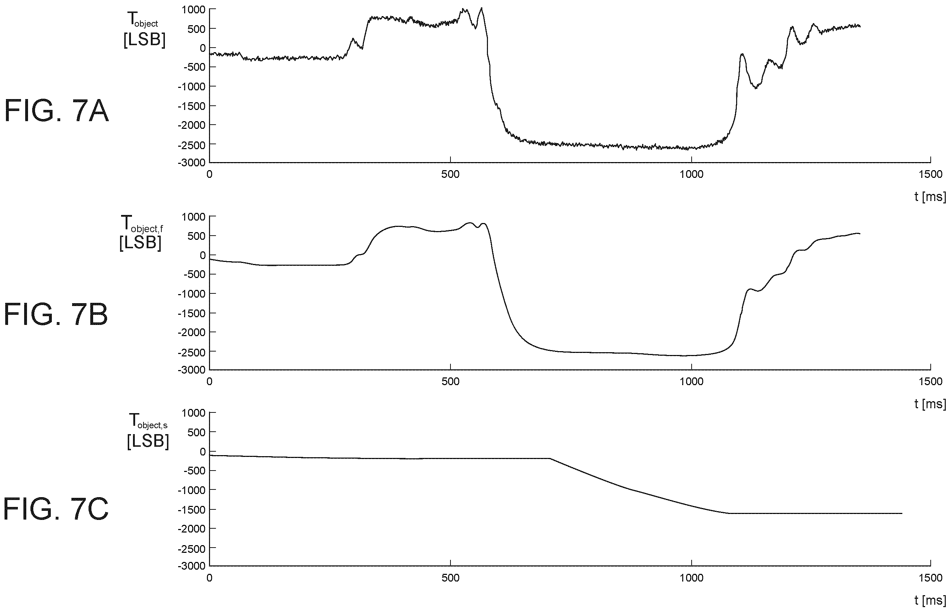

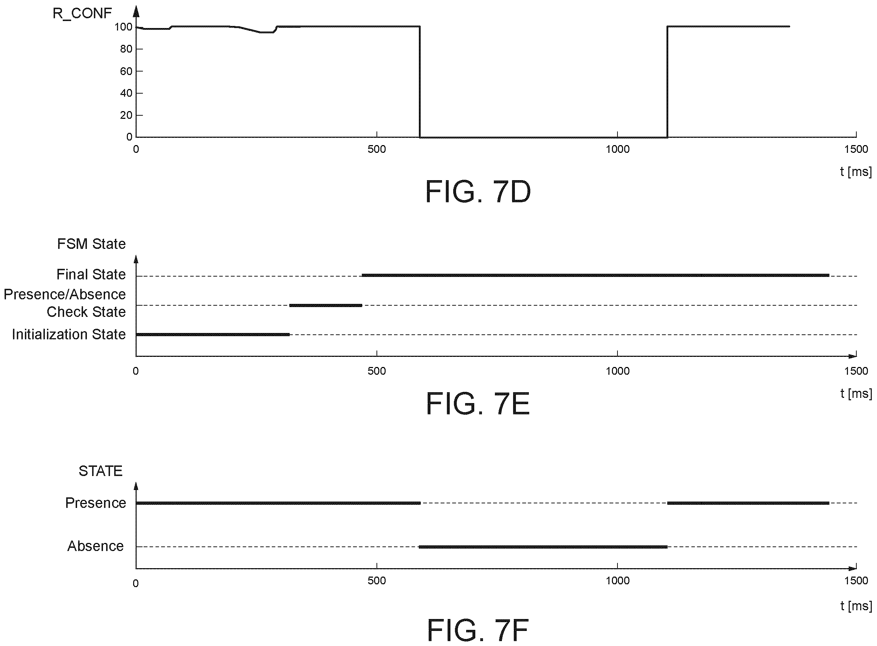

Figures 7A-7F, instead, show the case in which the user 11 is initially present in the field of view 26, then exits (approximately in 600sam<t<1100sam) and finally enters again.

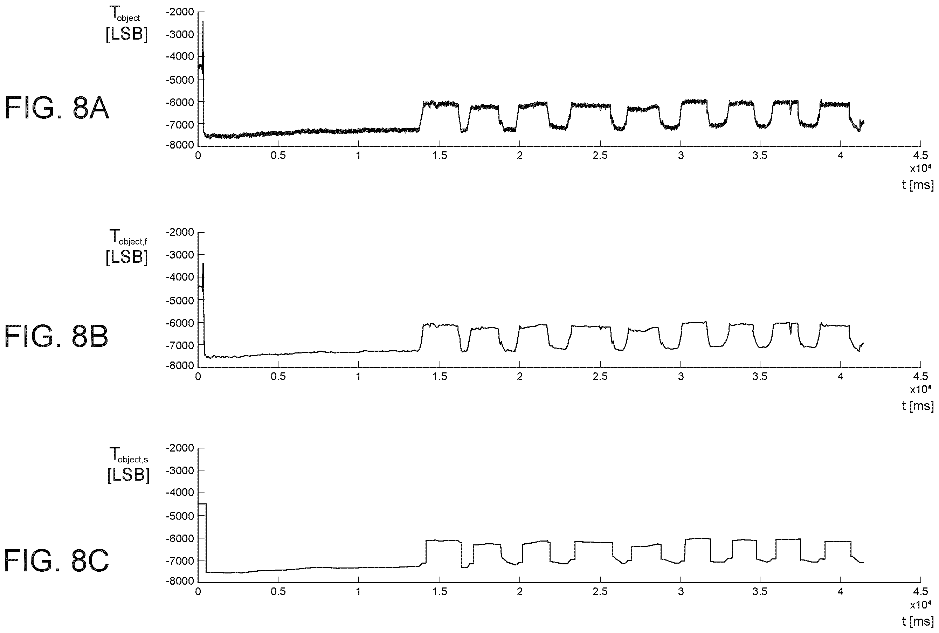

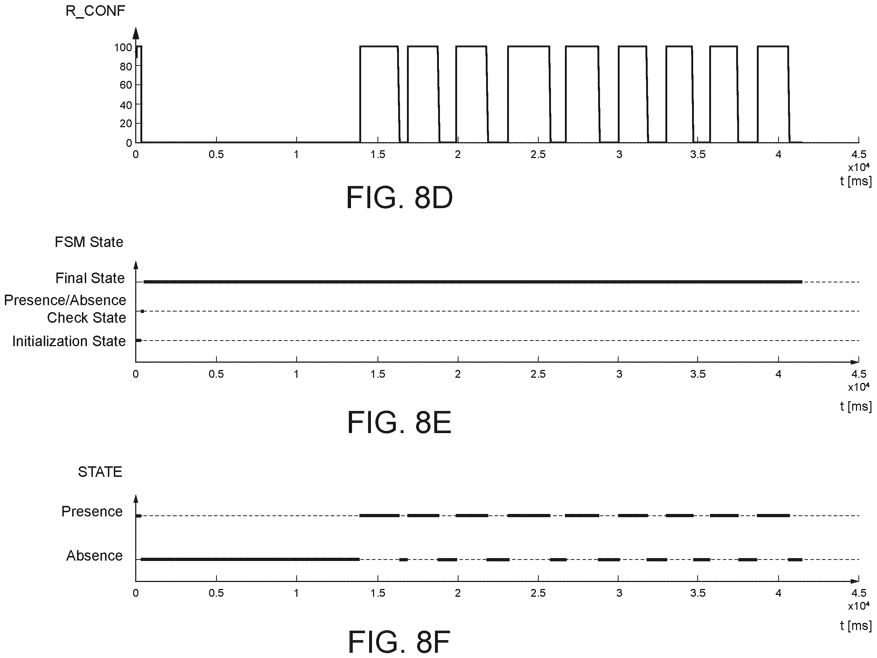

Figures 8A-8F show the case in which the user 11 enters and exits the field of view 26 multiple times.

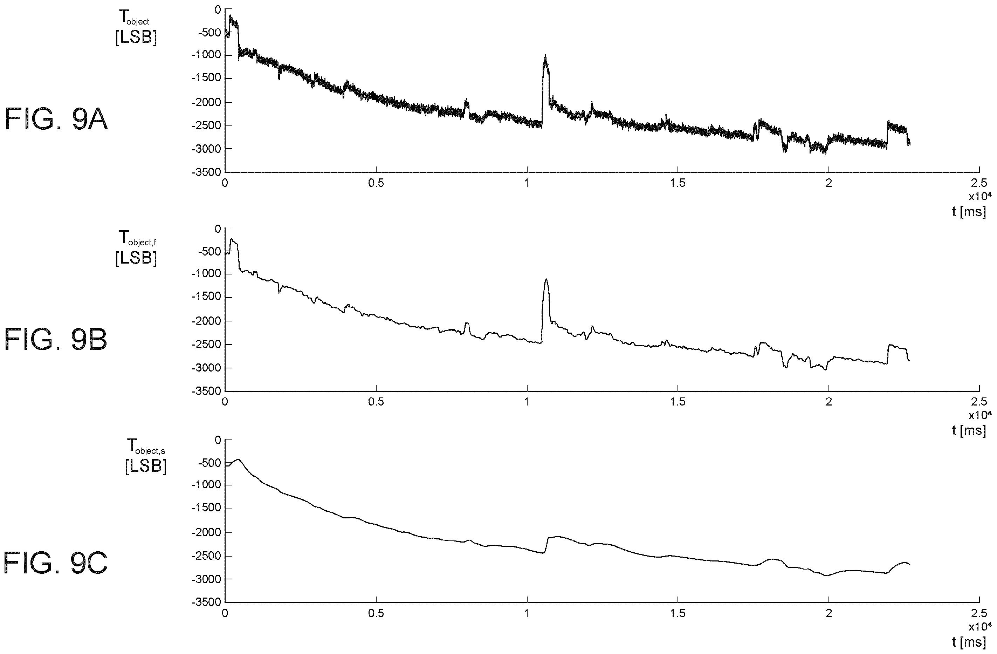

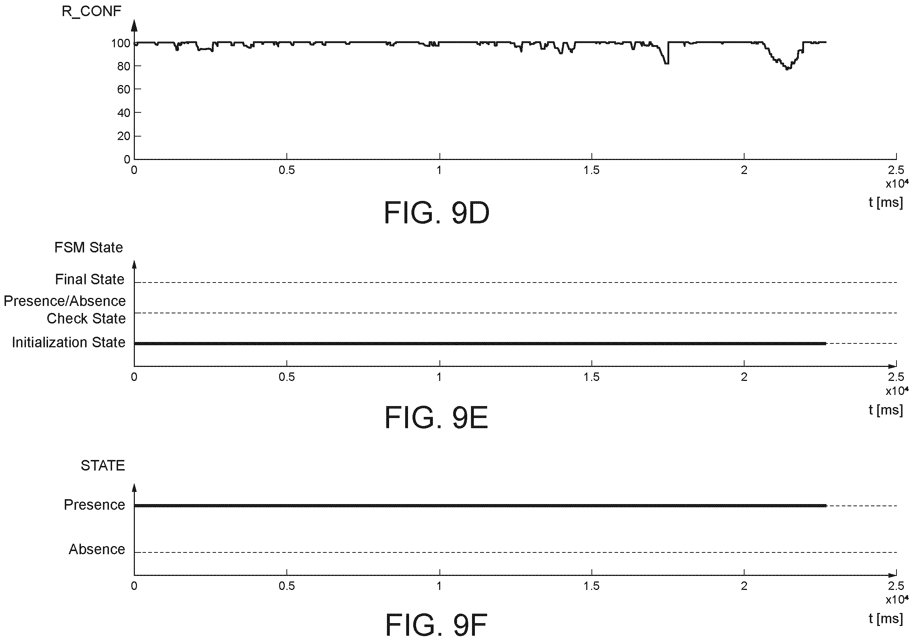

Figures 9A-9F show the case of continuous presence of the user 11 in the field of view 26.

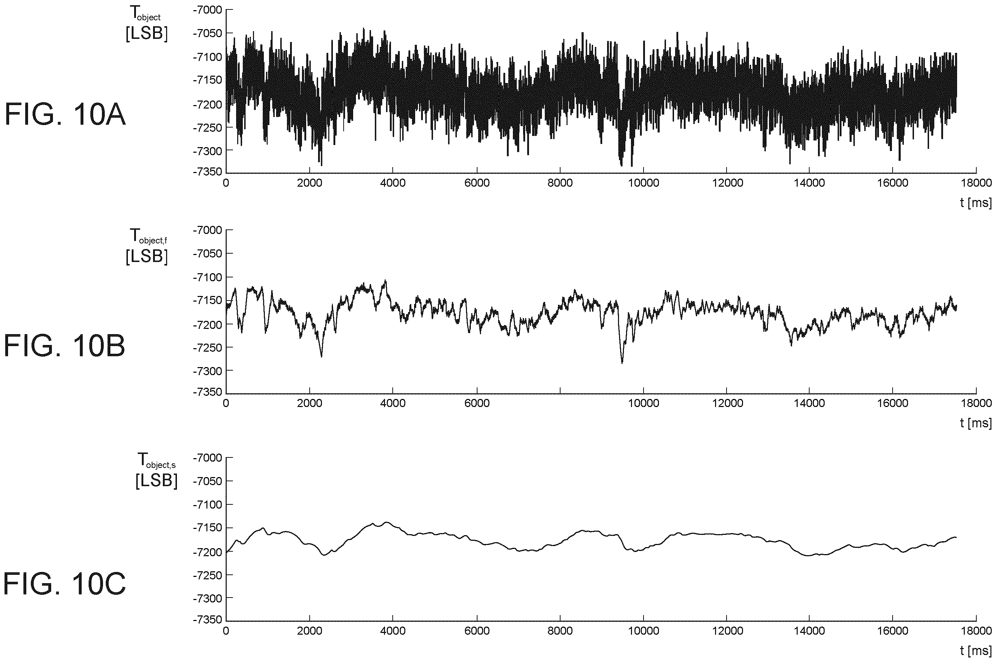

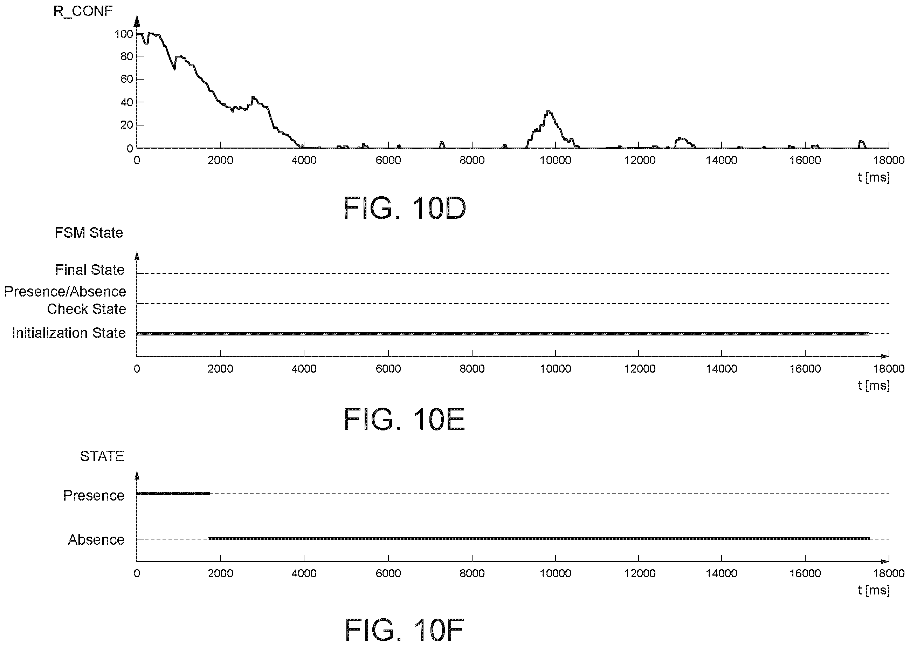

Figures 10A-10F show the case of continuous absence of the user 11 in the field of view 26.

From an examination of the characteristics of the invention made according to the present invention, the advantages that it affords are evident.

In particular, the detection method 50 and the FSM 30' allow the presence/absence of the user 11 in the field of view 26 to be detected with greater accuracy and reliability with respect to known solutions, thanks to the different types of analysis implemented as a function of the present conditions and the available information.

In particular, this approach allows to detect the initial presence/absence of the user 11 through motion analysis (i.e., for example, at the start-up of the PC 10) but also, subsequently to the reliable presence/absence detection, to transit to the more accurate baseline analysis.

Furthermore, the detection confidence information is very useful as it is not only indicative of the absence/presence state, but also indicates the degree of reliability of this detection.

The present detection is not influenced by drifts over time caused by factors such as changes in environmental temperature.

Furthermore, the present detection may be performed with extremely low energy consumption relative to different currently known solutions (e.g., with an energy saving reaching two orders of magnitude if known solutions based on ToF sensors are considered).

Finally, it is clear that modifications and variations may be made to the invention described and illustrated herein without thereby departing from the scope of the present invention, as defined in the attached claims. For example, the different embodiments described may be combined with each other to provide further solutions.

Furthermore, the IR sensor 22 may comprise a sensor control unit 28 and, unlike what has previously been mentioned, the detection method 50 may be performed by the sensor control unit 28 instead of the main control unit 24. For example, the sensor control unit 28 may be a microcontroller or co-processor integrated into the IR sensor 22.

Consequently, the FSM module 30 and the evaluation module 32 may be generically comprised in a control unit of the detection system 20, which may be the main control unit 24 or the sensor control unit 28. Consequently, the detection method 50 is implemented by this generic control unit of the detection system 20.

Furthermore, instead of the same baseline variation threshold for both the presence check condition and the absence check condition, a first positive baseline variation threshold for the presence check condition and a first negative baseline variation threshold for the absence check condition may also be used in the initialization state 40. Consequently, two thresholds different from each other may be used. For example, the first positive baseline variation threshold is equal to 500 LSB, while the first negative baseline variation threshold is equal to 400 LSB.

Similarly, a first positive baseline variation percentage threshold in the presence check state 42 and a first negative baseline variation percentage threshold in the absence check state 44 may be used, instead of the same first baseline variation percentage threshold in both cases. For example, the first positive baseline variation percentage threshold is equal to a first percentage (e.g., 90%) of the first positive baseline variation threshold, while the first negative baseline variation percentage threshold is equal to a second percentage (e.g., 90%) of the first negative baseline variation threshold.

Furthermore, a second positive baseline variation threshold to determine the presence of the user 11 and a second negative baseline variation threshold to determine the absence of the user 11 may be used in the final state 46, instead of the same baseline variation threshold in both cases. For example, the second positive baseline variation threshold is equal to 1000 LSB, while the second negative baseline variation threshold is equal to 800 LSB.

## Claims

1. A detection system (20) for detecting the presence or absence of a user (11), the detection system (20) comprising:
an infrared, IR, radiation sensor (22) configured to detect the IR radiation emitted by the user (11) when the user (11) is in a field of view (26) of the IR radiation sensor (22); and
a control unit (24; 28) configured to receive from the IR radiation sensor (22) an IR radiation signal (T_{object}) which is indicative, when the user (11) is in the field of view (26), of the intensity of the IR radiation emitted by the user (11),
the control unit (24; 28) being further configured to:
- determine the presence or absence of the user (11) in the field of view (26) through motion analysis performed on the IR radiation signal (T_{object}) ;
- verify whether a presence check or absence check condition is detected on the basis of the IR radiation signal (T_{object}) ;
- if the presence check condition is detected, verify whether the presence of the user (11) in the field of view (26) is confirmed on the basis of the IR radiation signal (T_{object}), or, if the absence check condition is detected, verify whether the absence of the user (11) in the field of view (26) is confirmed on the basis of the IR radiation signal (T_{object}) ;
- if the presence or absence of the user (11) in the field of view (26) is confirmed, continue to determine the presence or absence of the user (11) in the field of view (26) through baseline analysis performed on the IR radiation signal (T_{object}) as a function of the information of presence or absence of the user (11) in the field of view (26) previously confirmed.

2. The detection system according to claim 1, wherein the control unit (24; 28) comprises a finite state machine, FSM, module (30) configured to receive the IR radiation signal (T_{object}) and generate a detection confidence signal (R_CONF) indicative of the detection confidence of the presence of the user (11) in the field of view (26).

3. The detection system according to claim 2, wherein the FSM module (30) is configured to implement an FSM (30') comprising:
- an initialization state (40) wherein the presence or absence of the user (11) in the field of view (26) is determined through motion analysis and it is verified whether the presence check or absence check condition is detected;
- a presence check state (42) whereat it is arrived if the presence check condition is detected and wherein it is verified whether the presence of the user (11) in the field of view (26) is confirmed;
- an absence check state (44) whereat it is arrived if the absence check condition is detected and wherein it is verified whether the absence of the user (11) in the field of view (26) is confirmed; and
- a final state (46) whereat it is arrived if the presence or absence of the user (11) in the field of view (26) is confirmed and wherein the presence or absence of the user (11) in the field of view (26) continues to be determined through baseline analysis.

4. The detection system according to claim 2 or 3, wherein the control unit (24; 28) further comprises an evaluation module (32) coupled to the FSM module (30) and configured to receive the detection confidence signal (R_CONF) and to generate, on the basis of the detection confidence signal (R_CONF), a state signal (STATE) and a state confidence signal (S_CONF), the state signal (STATE) being indicative of the presence or absence state of the user (11) in the field of view (26) and the state confidence signal (S_CONF) being indicative of the confidence of the detected state of presence or absence of the user (11) in the field of view (26).

5. The detection system according to any of the preceding claims, wherein the IR radiation sensor (22) comprises a "Thermal MOS", TMOS.

6. The detection system according to any of the preceding claims, wherein the control unit (24; 28) is one of:
- a main control unit (24) of the detection system (20), external to the IR radiation sensor (22) and operationally coupled to the IR radiation sensor (22) to receive the IR radiation signal (T_{object}) ; and
- a sensor control unit (28) comprised in the IR radiation sensor (22) and configured to receive the IR radiation signal (T_{object}) .

7. An electronic apparatus (10) usable by a user (11) and comprising a detection system (20), according to anyone of the previous claims, for detecting the presence or absence of the user (11).

8. The electronic apparatus according to claim 7, configured to have one or more functionalities, in particular a Wake on Approach functionality and a Lock on Leave functionality, which are controllable through the determined information of presence or absence of the user (11) in the field of view (26).

9. A detection method (50) for detecting the presence or absence of a user (11),
the detection method (50) being performed through a detection system (20) comprising:
an infrared, IR, radiation sensor (22) configured to detect the IR radiation emitted by the user (11) when the user (11) is in a field of view (26) of the IR radiation sensor (22); and
a control unit (24; 28) configured to receive from the IR radiation sensor (22) an IR radiation signal (T_{object}) which is indicative, when the user (11) is in the field of view (26), of the intensity of the IR radiation emitted by the user (11),
the detection method (50) comprising, by the control unit (24; 28), the steps of:
- determining (S10) the presence or absence of the user (11) in the field of view (26) through motion analysis performed on the IR radiation signal (T_{object});
- verifying (S21, S14) whether a presence check or absence check condition is detected on the basis of the IR radiation signal (T_{object});
- if the presence check condition is detected, verifying (S16, S18) whether the presence of the user (11) in the field of view (26) is confirmed on the basis of the IR radiation signal (T_{object}) , or, if the absence check condition is detected, verifying (S20, S22) whether the absence of the user (11) in the field of view (26) is confirmed on the basis of the IR radiation signal (T_{object});
- if the presence or absence of the user (11) in the field of view (26) is confirmed, continuing to determine (S24) the presence or absence of the user (11) in the field of view (26) through baseline analysis performed on the IR radiation signal (T_{object}) as a function of the information of presence or absence of the user (11) in the field of view (26) previously confirmed.

10. The detection method according to claim 9, wherein determining the presence or absence of the user (11) comprises generating a detection confidence signal (R_CONF) indicative of the detection confidence of the presence of the user (11) in the field of view (26).

11. The detection method according to claim 10, wherein determining (S10) the presence or absence of the user (11) in the field of view (26) through motion analysis comprises decreasing the confidence value of the detection confidence signal (R_CONF) with a decreasing rate if a standard deviation of the IR radiation signal (T_{object}) is lower than a first motion threshold, or increasing the confidence value of the detection confidence signal (R_CONF) with an increasing rate if the standard deviation of the IR radiation signal (T_{object}) is greater than a second motion threshold greater than the first motion threshold.

12. The detection method according to claim 11, wherein the decreasing rate is fixed and predefined and the increasing rate is variable and equal to the sum of a fixed and predefined rate and a rate variable as a function of the standard deviation of the IR radiation signal (T_{object}).

13. The detection method according to any of claims 10-12, wherein verifying (S12, S14) whether the presence check or absence check condition is detected comprises:
- verifying (S12) whether a presence/absence check condition is detected; and
- if the presence/absence check condition is detected, verifying (S14) whether the detected presence/absence check condition is indicative of a presence check or of an absence check,
wherein verifying (S12) whether the presence/absence check condition is detected comprises calculating a baseline variation of the IR radiation signal (T_{object}) and comparing the baseline variation of the IR radiation signal (T_{object}) with a baseline variation threshold,
wherein the baseline variation of the IR radiation signal (T_{object}) is correlated to the difference between a fast mean signal and a slow mean signal of the IR radiation signal (T_{object}) , the fast mean signal and the slow mean signal being calculated by filtering the IR radiation signal (T_{object}) with respective filters with different time constants,
wherein the presence/absence check condition is detected if the baseline variation of the IR radiation signal (T_{object}) is, in absolute value, greater than the baseline variation threshold,
wherein verifying (S14) whether the detected presence/absence check condition is indicative of the presence check or the absence check comprises verifying whether the baseline variation of the IR radiation signal (T_{object}) is positive or negative, the detected presence/absence check condition being indicative of the presence check if the baseline variation of the IR radiation signal (T_{object}) is positive and the detected presence/absence check condition being indicative of the absence check if the baseline variation of the IR radiation signal (T_{object}) is negative.

14. The detection method according to claim 13, wherein verifying whether the presence or absence of the user (11) in the field of view (26) is confirmed comprises verifying whether the baseline variation of the IR radiation signal (T_{object}) remains, in absolute value, greater than a first baseline variation percentage threshold for a time interval greater than a first threshold time interval or a second threshold time interval, respectively.

15. The detection method according to claim 13 or 14, wherein determining the presence or absence of the user (11) in the field of view (26) through the baseline analysis comprises verifying whether the baseline variation of the IR radiation signal (T_{object}) is, in absolute value, greater than the baseline variation threshold,
wherein if, during the baseline analysis, the baseline variation of the IR radiation signal (T_{object}) is positive and, in absolute value, greater than the baseline variation threshold, the presence of the user (11) in the field of view (26) is determined, and
wherein if, during the baseline analysis, the baseline variation of the IR radiation signal (T_{object}) is negative and, in absolute value, greater than the baseline variation threshold, the absence of the user (11) in the field of view (26) is determined.

16. The detection method according to any of claims 13-15, wherein, during the motion analysis, the value of the slow mean signal is updated on the basis of the IR radiation signal (T_{object}) when the standard deviation of the fast mean signal is lower than a mean update threshold, and remains unchanged when the standard deviation of the fast mean signal is greater than, or equal to, the mean update threshold, and
wherein, during the baseline analysis and following the fact that the baseline variation of the IR radiation signal (T_{object}) becomes in absolute value greater than a second baseline variation percentage threshold, the value of the slow mean signal remains unchanged as long as the standard deviation of the IR radiation signal (T_{object}) is greater than a clamping threshold, and, when the standard deviation of the IR radiation signal (T_{object}) becomes equal to, or lower than, the clamping threshold, it is initialized to the value that the fast mean signal possesses at that moment and subsequently resumes updating on the basis of the IR radiation signal (T_{object}) .

17. The detection method according to any of claims 9-16, wherein if the presence check condition or the absence check condition is detected but the presence or absence of the user (11) in the field of view (26) is not confirmed, the detection method (50) returns to the step of determining (S10) the presence or absence of the user (11) in the field of view (26) through the motion analysis performed on the IR radiation signal (T_{object}).

18. A computer program product storable in a control unit (24; 28),
the computer program being designed in such a way that, when executed, the control unit (24; 28) becomes configured to perform a detection method (50) according to any of claims 9-17.
